# EUROPEAN PATENT SPECIFICATION

(11) **EP 1 058 921 B1**
(45) Date of publication and mention of the grant of the patent: **21.10.2009**
(21) Application number: 99964637.5
(22) Date of filing: 15.12.1999
(51) Int. Cl.: G08C 19/28

(54) **FULLY FUNCTIONAL REMOTE CONTROL EDITOR AND EMULATOR**
VOLL FUNKTIONALE EDITOR- UND EMULATORFERNSTEUERUNG
EDITEUR ET EMULATEUR DE TELECOMMANDE ENTIEREMENT FONCTIONNELS

(30) Priority: 28.12.1998 US 113991 P; 17.03.1999 US 271200
(43) Date of publication of application: 13.12.2000
(73) Proprietor: Koninklijke Philips Electronics N.V., 5621 BA Eindhoven (NL)
(72) Inventor: VAN EE, Jan, NL-5656 AA Eindhoven (NL)
(74) Representative: Schmitz, Herman Jan Renier
(86) International application number: PCT/EP1999/010230
(87) International publication number: WO 2000/039772

(56) References cited:
- EP-A- 0 779 572
- US-A- 5 204 768
- US-A- 5 819 294

## Description

The invention relates to a system and method for programming or testing a programmable remote control device.

Ever increasingly more sophisticated electronic audio/video (AV) equipment and home automation equipment are being introduced on the consumer electronics (CE) market. Typically, the equipment is programmable by the end-user in order to tailor the numerous functionalities and settings to the individual preferences. The user-interactivity and synergy aspects of the equipment are determined substantially by software such as interactive applications, control software and GUI's. See, for example, to the HAVi architecture and the Home API initiative, both involving substantial contributions from Philips Electronics, the Jini technology of Sun Microsystems, Inc., etc. For more information on these technologies, see below.

A step forward in user-friendliness regarding interacting with the equipment is the universal programmable remote controller, such as the "RC-2000" of Marantz and the "Pronto" made by Philips Electronics. The term "universal remote" refers to a device that enables the end-user to control the majority of his/her collection of remotely controllable apparatus, regardless of the type or brand of the individual apparatus. This universal controllability is achieved by accommodating on the remote a data base of multiple sets of existing control (IR or RF) codes, each particular set being associated with a particular type of apparatus of a particular brand. In addition, the universal remote is programmable to learn or adopt new codes and to associate them with a particular user-defined input. The "Pronto", for example, has built-in RC-5 and RC-6 codes for Philips and Marantz equipment, IR-sending and IR-learning eyes, and an RS232 serial port connector for after-market expandability, e.g., via a PC. The "Pronto" provides a GUI via an LCD touch screen and also has direct-access buttons for frequently used control functions. Built-in are customizable device templates for full control; the options to assign control functions to icons or buttons; options to delete and create icons or buttons; to program and edit macros; a keyboard with soft keys for (re-) labeling buttons, icons and templates or the GUI's control panels. In short, the "Pronto" is highly customizable in terms of the GUI's lay-out, appearance, labeling, organization and in terms of programming and editing the control functions.

US 5,819,294 discloses the use of a PC for programming a programmable remote controller. The PC has an onboard database for sets of codes used by a variety of commercially available remote controllers. In order to program the remote, the user lets the PC find a match between a single pulse-code transmitted by a specific known controller on the one hand and an item in the database on the other hand.

EP 0 779 572 A2 discloses an apparatus, e.g. a PC, for remote control of electronic devices. Processor units of the apparatus are arranged to execute one or more application programs for controlling generation and transmission of wireless communications signals for remote control of one or more electronic devices. The apparatus can be used instead of so-called universal remote control devices.

The following co-pending applications are related to HAVI:

EP 0867004-A (Attorney docket PHA 23,169) filed 10/15/96 for Paul Chambers et al., for TASK-DRIVEN DISTRIBUTED MULTIMEDIA CONSUMER SYSTEM. This patent document relates to a control system with multiple consumer electronics devices and task-driven control means coupled to the devices for controlling an interaction among the devices. The control means acts on respective software representations of each respective one of the consumer devices. By encapsulating the variable complexity of the task within a software representation, it can be made as simple or as sophisticated as needed to bring the capabilities up to a common level. Since the level of interface is common to the devices, applications can uniformly manipulate devices which embody very different levels of sophistication.

EP 1038218-A1 (Attorney docket PHA 23,438) filed 6/30/98 for Gregory Gewickey and Yevgeniy Shteyn for DYNAMIC DE-REGISTERING OF DEVICES IN SYSTEM WITH MULTIPLE COMMUNICATION PROTOCOLS. This patent document relates to an information processing system has first and second electronic sub-systems, and control means for controlling the sub-systems. At least the first sub-system has a software representation registered with the control means. The control means changes a state of the first sub-system through interacting with the software representation. The first and second sub-systems are also capable of interacting directly with one another without the control means being involved. To avoid conflicts, at least the first sub-system is capable of de-registering with the control means so as to functionally disable its software representation at the control means.

EP 1044537-A1 (Attorney docket PHA 23,492) filed 9/2/98 for Yevgeniy Shteyn for LOW DATA-RATE NETWORK REPRESENTED ON HIGH DATA-RATE HAVi-NETWORK. This patent document relates to a PC-based home automation system that uses a low data-rate transport layer and COM-based software components for control of devices in a home automation network. The home automation system is merged with a messaging-based HAVi-network that uses IEEE 1394 as a high data-rate transport layer. The HAVi-network controls audio/video equipment in a home entertainment system. The home automation services and devices are registered as a HAVi-compliant elements with the HAVi network's FAV or IAV device. The home automation resources (devices and services) have both COM OLE Automation Interfaces and HAVI-compliant interfaces to permit control of the home automation system from the HAVi-network.

The following co-pending applications are related to Home API:
EP 1044537-A1 (Attorney docket PHA 23,492) filed 9/2/98 for Yevgeniy Shteyn for LOW DATA-RATE NETWORK REPRESENTED ON HIGH DATA-RATE HAVi-NETWORK mentioned above.
EP 1046101-A1 (Attorney docket PHA 23,483) filed 10/2/98 for Yevgeniy Shteyn for CALLS IDENTIFY SCENARIO FOR CONTROL OF SOFTWARE OBJECTS VIA PROPERTY ROUTES. This patent document relates to an information processing system with first and second physical components represented by a first and second software objects. Both objects have properties that are changeable through calls to the objects. The system enables registering a property route linking a first property of the first object to a second property of the second object so that a change in the first property causes the second call being issued to the second object upon invoking the property route. The input call to the first object comprises an identifier enabling to conditionally invoke the route. In this manner, routes belonging to different scenarios are being kept independent so that the system operates more reliable that without scenario identifiers.
EP 1064756-A1 (Attorney docket PHA 23,484) filed 10/2/98 for Yevgeniy Shteyn for CONTROL PROPERTY IS MAPPED ONTO MODALLY COMPATIBLE GUI ELEMENT. This patent document relates to an information processing system that has an electronic device and a controller for control of a functionality of the device. An abstract representation of the functionality is provided to the controller. The abstract representation exposes a modality of controlling the functionality. The controller enables controlling the functionality through interaction with the abstract representation. The modality controls associating the control of the functionality with a modally compatible controlling capability of the controller. The modality exposed can be, for example, "Boolean", "float", "integer array".
EP 1055171-A1 (Attorney docket PHA 23,529) filed 12/17/98 for Yevgeniy Shteyn for SYNCHRONIZING PROPERTY CHANGES TO ENABLE MULTIPLE CONTROL OPTIONS. This patent document relates to an information processing system whose components are represented by software objects, the properties of which can be changed through function calls. Setting a property of an object controls the associated component. Properties are connected through routes that propagate state changes throughout the system without the need for a running client application. Two-way property routes are used to keep consistence among a controlled object and multiple controlling objects without the risk of endless loops. To achieve this, the two-way route is executed to change a state of a specific one of the properties upon a change of state of another one of the properties if the change of state of the other property was caused by an effect other than the route itself.
As to PC networking, see, e.g., EP 1046260-A1 (Attorney docket PHA 23,488) filed 8/13/98 for Lawrence Freeman for HOME-NETWORK AUTOCONFIGURATION. This patent document relates to the automatic configuration of PC's in a (home) network in order to share resources registered at the individual PC's. Services and resources local to one PC are registered with the other PC and vice versa. The registry hides whether a service or resource is remote or local. In operational use of the network, a resource or service local to one PC is addressable from the remote PC as if it were local to the latter. A home network of PC's is configured automatically in this manner.

As to some aspects of the "Pronto", see, e.g., the following co-pending applications:

EP 0990202-A1 (Attorney docket PHA 23,387) filed 4/17/98 for Jan van Ee and Sung Choi for GRAPHICAL USER INTERFACE TOUCH SCREEN WITH AUTO ZOOM FEATURE. This patent document relates to a GUI with a touch screen having an entire collection of icons displayed at a scale in which the individual function of each icon is recognizable, but to small to easily access features of the function, and wherein upon touching the screen area accommodating an area of the icon, the screen provides a zoomed-in version of that area so that the user can select a desired feature.

EP 1274483-A (Attorney docket PHA 23,469) filed 8/4/98 for Jan van Ee for REMOTE CONTROL HAS ANIMATED GUI. This patent document relates to A remote control device for remote control of home theater equipment has a display with a touch screen representing a GUI. User-activation of the GUI causes its appearance to change. The change is effected through animation. Animation is the simulation of movement created by displaying a series of bitmaps. The animation lets the user perceive the change as a smooth transition. Thus the impression is avoided of an abrupt confrontation with a new lay-out.

EP 1057276-A1 (Attorney docket PHA 23,470) filed 8/5/98 for Jan van Ee for GUI OF REMOTE CONTROL FACILITATES USER-FRIENDLY EDITING OF MACROS. This patent document relates to a remote control device for a home theater. The device has a macro creation/editing mode with authoring tools on the remote's GUI. One of the editing tools lets the user move a selected macro step visibly up or down the list of steps on the GUI.

As to customer support via the Internet, see the following co-pending applications:

EP 1044422-A1 (Attorney docket PHA 23,500) filed 9/25/98 for Adrian Turner et al., for CUSTOMIZED UPGRADING OF INTERNET-ENABLED DEVICES BASED ON USER-PROFILE. This patent document relates to a server system that maintains a user profile of a particular end-user of consumer electronics network-enabled equipment and a data base of new technical features for this type of equipment. If there is a match between the user-profile and a new technical feature, and the user indicates to receive information about updates or sales offers, the user gets notified via the network of the option to obtain the feature.

EP 1060448-A1 (Attorney docket PHA 23,527) filed 11/10/1998 for Yevgeniy Shteyn for UPGRADING OF SYNERGETIC ASPECTS OF HOME NETWORKS. This patent document relates to a server system with access to an inventory of devices and capabilities on a user's home network. The inventory is, for example, a look-up service as provided by HAVi or Jini architecture. The server has also access to a data base with information of features for a network. The server determines if the synergy of the apparatus present on the user's network can be enhanced based on the listing of the inventory and on the user's profile. If there are features that are relevant to the synergy, based on these criteria, the user gets notified.

All of the above co-pending applications, the HAVI-spec, the Home API-spec and Jini-spec, illustrate the direction that CE equipment and home automation is taking. These documents also indirectly raise the issue of user-friendliness regarding controllability, reliability and accessibility. How technically sophisticated the equipment may be, it will be of little use to the consumer if he/she cannot get it to do what he/she wants it to do and when he/she wants it be done. An ergonomically designed universal programmable remote controller, such as the "Pronto", may help to lower the acceptance-threshold for home theater and home automation systems, owing to the controller's user-friendliness, personalizing options and wide applicability.

On the other hand, programming and individualizing such a programmable remote is an exercise that requires time, accuracy and attention from the end-user. Verifying or testing the user-programmed functionalities is done only after the programming and in operational use of the remote.

It is an object of the invention to increase user-friendliness and ease-of-handling of a programmable remote by facilitating the programming and verification of the programmed control steps.

To this end, the invention provides a method of enabling programming a programmable remote control device for control of electronic equipment which comprises the step of enabling to run a software application on a computer for enabling an end-user to modify a user-programmed configuration of the remote control device. The method is **characterized in that** the method further comprises the step of enabling the software application to emulate operating the remote control device configured with the user-programmed configuration by graphically representing a control panel of the remote control device and by controlling the equipment via the computer based on interaction between the end-user and the control panel. This requires that the computer communicate with the equipment as if it were the remote. If the remote contains an IR or RF transmitter, the computer communicates through a similar IR or RF transmitter, for example.

Preferably, the application comprises a visual editor for creating and editing a configuration of the remote. A configuration defines a user-interface with all its control functions for apparatus, macro groups, GUI panel lay-outs, button appearances and button behaviors. The graphic representation of the configuration provides, for example, a tree structure view of the overall configuration. A tree view is a graphical representation of a type of data structure, i.e., of a scheme for organizing related pieces of information, in which each element is attached to one or more elements directly beneath it. For example, the remote is to control multiple apparatus in the home. Each specific apparatus has a plurality of controllable functionalities or properties. In the tree view, the properties of a specific apparatus are arranged underneath the associated device that itself is arranged underneath the home-cluster of apparatus. The graphical representation of the configuration provides, for example, also a panel view of the control panels as on the remote, including the hard buttons and the soft keys clustered in panels on the remote's GUI.

Preferably, the application comprises an emulator for graphically representing a model of the remote that allows user-interaction via suitable computer input means, such as a mouse, trackball or a keyboard. The emulator is a fully functional emulator of the remote control and behaves exactly like the 'real thing'. The emulator can therefore be used by end-users to quickly test configurations they have made for their 'real' remote control device. Without the use of an emulator, the configuration would have to be downloaded to the 'real' remote before it could be tested. This is a time-consuming process if the connection between the remote and a PC is relatively slow in view of saving costs (e.g., an RS232 link). Preferably, the emulator is achieved by defining a software layer which abstracts from the actual hardware on which the remote's window manager (or UIMS) and application (control) are running. By implementing this layer on both a 'real' remote and a PC, the window manager and application sources can be compiled for both a 'real' remote and a PC. The emulator thus becomes an almost free byproduct of the 'real' remote's software development.

Emulators are well known in the design and development stage of professional software creation and circuitry manufacturing.

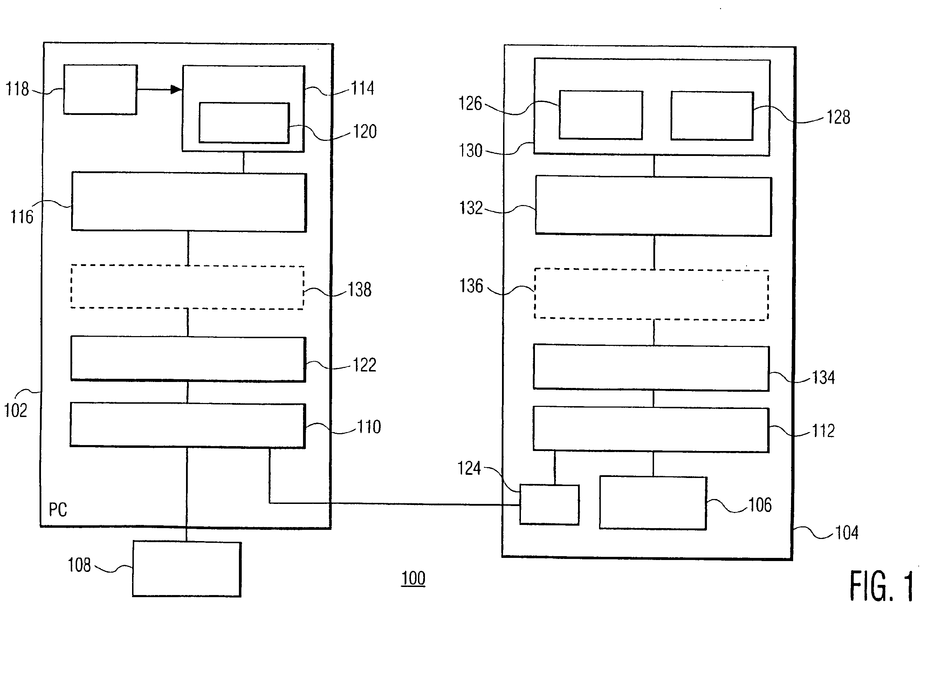

The invention is explained by way of example and with reference to the accompanying drawings, wherein Fig.1 is a block diagram of a system in the invention.

Fig.1 is a block diagram with main components of an information processing system 100 in the invention. System 100 comprises a computer 102, here a PC, and a remote control device 104, here a "Pronto" of Philips Electronics, mentioned above. Device 104 is a user-programmable remote control with an IR-transmitter 106 for IR-control of electronics equipment (not shown) such as TVs, VCRs, CD players, DVD players, audio pre-amplifiers; tuners, etc. Computer 102 is connected to a further IR-transmitter 108. Both computer 102 and remote 104 have their own individual hardware platforms 110 and 112, respectively that may be totally different in implementation.

The user loads an application 114 and a UI management system (UIMS) 116 (or windows manager) onto computer 102, e.g., via a CD-ROM, a diskette or via the Internet. UIMS 116 comprises a software library with high-level abstractions for implementing user interfaces. UI management systems are known in the art. Application 114 comprises an emulator 120. It is assumed that PC 102 has a visual editor 118.

Visual editor 118 enables the user to create and to edit a configuration of remote 104. A configuration defines a user-interface with all its control functions for apparatus, macro groups, GUI panel lay-outs, button appearances and button behaviors for remote 104. The graphic representation of the configuration provides, for example, a tree structure view of the overall configuration. A tree view is a graphical representation of a type of data structure, i.e., of a scheme for organizing related pieces of information, in which each element is attached to one or more elements directly beneath it. For example, remote 104 is to control multiple apparatus (not shown) in the home. Each specific apparatus has a plurality of controllable functionalities or properties. In the tree view, the properties of a specific apparatus are arranged underneath the associated device that itself is arranged underneath the home-cluster of apparatus. The graphical representation of the configuration provides, for example, also a view of the control panels as they appear on remote 104 when in the programming mode. A panel provides a cluster of soft keys whose functions are semantically associated with the device or property to be controlled.

Application 114 comprises an emulator 120 for graphically representing a model ofremote 104 based on the configuration created through editor 118. Emulator 120 allows user-interaction with a model of remote 104 rendered on the display (not shown) of computer 102 as if the model were the real remote 104. User-interaction is achieved via suitable computer input means, such as a mouse, trackball or a keyboard (not known), as if it were real-life remote 104. For example, clicking the mouse when the cursor has been located over a hard key or soft key on the model of remote represented on the display of computer 102 triggers an event. The event causes computer 102, through a proper software system 122 for collation or otherwise managing of functions and through a driver (not shown), to generate the associated IR code transmitted via IR blaster 108. In this manner, the user is enabled to test user-programmed configurations directly via computer 102, rather than either having to program remote 104 itself directly, step for step, or to first download the programmed configuration from computer 102 into remote 104, e.g., via serial port 124, and test it thereupon. Serial port 124 is preferably a low-cost link (e.g. RS232). Accordingly, downloading a configuration created at computer 102 is a rather time-consuming process because of this relatively slow link between computer 102 and remote 104. Testing via computer 102 contributes to the user-friendliness of working with universal programmable remote controllers.

It is noted that computer 102 can be connected to remote 104 to use IR transmitter 106 of remote 104, rather than having a separate IR blaster 108.

The preferred embodiment of the invention adds to the above advantage a cost-effectiveness aspect. Remote 104, being a universal and user-programmable control device, has of course, editing and controlling functionalities 126 and 128, respectively, as specified above, bundled in an application 130. Editing and control functionalities 126 and 128 interact with platform 112 of remote 104 through a suitable UIMS 132 and collation system 134. Emulator 120 is now achieved as follows. A software interface layer 136 has been defined which abstracts from the actual hardware of remote 104 on which window manager 132 and application 130 are running. By implementing this layer 136 on 'real' remote 104 and on computer 102 as an interface layer 138, window manager 116/132 and application sources 114/130 can be compiled for both the 'real' remote 104 and a computer 102.

Emulators are well known and used in the professional industry in the development phase to allow software development to start before the target hardware has been completed. Using the abstraction layers 136 and 138 the emulator, now as a consumer end-product, is an almost free byproduct of the 'real' remote's software development. The invention thus enables the end-user to program or re-program remote 104 more efficiently and ergonomically.

Note that the necessary software components for implementing the editor 118 and emulator 120 on computer 102 could be downloaded via Internet and as part of a service provided by the manufacturer. Within this context, reference is made to co-pending applications EP 1044422-A1 (Attorney docket PHA 23,500) and EP 1060448-A1 (Attorney docket PHA 23,527) mentioned above. Also note that the configuring or re-configuring of programmable remote 104 could be outsourced to a specialist, possibly as part of above services, and that the result could be downloaded via Internet onto the end-user's computer 102 for testing or fine-tuning.

## Claims

1. An information processing system (100), comprising:
- a user-programmable remote control device (104) having a transmitter (106) for control of electronic equipment; and
- a software application (114) for running on a computer (102) to enable an end-user to modify a user-programmed configuration of the remote control device (104),
**characterized in that:**
- the software application is further operative to emulate operating the remote control device (104) configured with the user-programmed configuration by graphically representing a control panel of the remote control device (104) and by controlling the equipment via the computer (102) based on interaction between the end-user and the control panel.

2. The system of claim 1, wherein:
- the system (100) comprises a further transmitter (108) coupled to the computer; and
- the software application (114) enables the user to control the equipment via the computer and the further transmitter.

3. The system of claim 1, wherein the remote control device (104) is capable of being programmed via the computer.

4. The system of claim 3, wherein the software application (114) comprises a visual editor (118).

5. A method of enabling to emulate operating a user-programmable remote control device (104) for control of electronic equipment, the method comprising:
- enabling to run a software application (114) on a computer (102) for enabling an end-user to modify a user-programmed configuration of the remote control device (104), **characterized in that** the method further comprises the step of:
- enabling the software application (114) to emulate operating the remote control device configured with the user-programmed configuration by graphically representing a control panel of the remote control device and by controlling the equipment via the computer based on interaction between the end-user and the control panel.

6. The method of claim 5, comprising enabling emulating a programming of the device through a software application (118).

7. The method of claim 6 comprising enabling downloading from the computer into the device a result from the emulated programming.

8. A software application (114) for running on a computer (102), the software application, when executed by the computer, causing the computer to enable an end-user to modify a user-programmed configuration of a user-programmable remote control device (104), and to emulate operating the remote control device (104) configured with the user-programmed configuration by graphically representing a control panel of the remote control device (104) and by controlling the equipment via the computer (102) based on interaction between the end-user and the control panel.

9. The software application of claim 8, comprising a visual editor (118) for enabling editing a control configuration of the controller.

10. The software application of claim 8, comprising an emulator (120) being capable of being run on the remote control device (104) for operational use of the remote control device (104).

## Patentansprüche

1. Informationsverarbeitungssystem (100) mit:
- einer anwenderprogrammierbaren Fernbedienungseinrichtung (104) mit einer Sender (106) zur Steuerung eines elektronischen Geräts; sowie
- einer Softwareapplikation (114) zum Ablauf auf einem Computer (102), um einen Endanwender zu befähigen, eine anwenderprogrammierte Konfiguration der Fernbedienungseinrichtung (104) zu modifizieren,
**dadurch gekennzeichnet, dass**
- die Softwareapplikation weiterhin dazu dient, den Betrieb der mit Hilfe der anwenderprogrammierten Konfiguration konfigurierten Fernbedienungseinrichtung (104) durch graphische Darstellung eines Bedienfeldes der Fernbedienungseinrichtung (104) und durch Steuerung des Geräts über den Computer (102) aufgrund der Interaktion zwischen dem Endanwender und dem Bedienfeld zu emulieren.

2. System nach Anspruch 1, wobei
- das System (100) einen an den Computer gekoppelten, weiteren Sender (108) umfasst; sowie
- die Softwareapplikation (114) den Anwender befähigt, das Gerät über den Computer und den weiteren Sender zu steuern.

3. System nach Anspruch 1, wobei die Fernbedienungseinrichtung (104) imstande ist, über den Computer programmiert zu werden.

4. System nach Anspruch 3, wobei die Softwareapplikation (114) einen visuellen Editor (118) umfasst.

5. Verfahren, um den Betrieb einer anwenderprogrammierbaren Fernbedienungseinrichtung (104) zur Steuerung eines elektronischen Geräts emulieren zu können, wobei das Verfahren den folgenden Schritt umfasst:
- Ermöglichen des Ablaufs einer Softwareapplikation (114) auf einem Computer (102), um einen Endanwender zu befähigen, eine anwenderprogrammierte Konfiguration der Fernbedienungseinrichtung (104) zu modifizieren,
**dadurch gekennzeichnet, dass** das Verfahren den folgenden Schritt umfasst:
- Befähigen der Softwareapplikation (114), den Betrieb der mit Hilfe der anwenderprogrammierten Konfiguration konfigurierten Fernbedienungseinrichtung durch graphische Darstellung eines Bedienfeldes der Fernbedienungseinrichtung und durch Steuerung des Geräts über den Computer aufgrund der Interaktion zwischen dem Endanwender und dem Bedienfeld zu emulieren.

6. Verfahren nach Anspruch 5, welches den Schritt des Ermöglichens des Emulierens einer Programmierung der Einrichtung durch eine Softwareapplikation (118) umfasst.

7. Verfahren nach Anspruch 6, welches den Schritt des Ermöglichens des Herunterladens eines Ergebnisses aus der emulierten Programmierung von dem Computer in die Einrichtung umfasst.

8. Softwareapplikation (114) zum Ablauf auf einem Computer (102), wobei die Softwareapplikation bei Ausführung durch den Computer bewirkt, dass der Computer einen Endanwender befähigt, eine anwenderprogrammierte Konfiguration einer anwenderprogrammierbaren Fernbedienungseinrichtung zu modifizieren und den Betrieb der mit Hilfe der anwenderprogrammierten Konfiguration konfigurierten Fernbedienungseinrichtung (104) durch graphische Darstellung eines Bedienfeldes der Fernbedienungseinrichtung (104) und durch Steuerung des Geräts über den Computer (102) aufgrund der Interaktion zwischen dem Endanwender und dem Bedienfeld zu emulieren.

9. Softwareapplikation nach Anspruch 8, mit einem visuellen Editor (118), um ein Editieren einer Steuerkonfiguration der Steuereinheit zu ermöglichen.

10. Softwareapplikation nach Anspruch 8, mit einem Emulator (120), der imstande ist, zum betrieblichen Einsatz der Fernbedienungseinrichtung (104) auf der Fernbedienungseinrichtung (104) zu laufen.

## Revendications

1. Système de traitement d'information (100) comprenant :
- un dispositif de télécommande programmable par l'utilisateur (104) ayant un émetteur (106) pour la commande de l'équipement électronique ; et
- une application logicielle (114) pour être exécutée sur un ordinateur (102) afin de permettre à un utilisateur final de modifier une configuration programmée par l'utilisateur du dispositif de télécommande (104),
**caractérisé en ce que :**
- l'application logicielle est encore active pour émuler l'exploitation du dispositif de télécommande (104) qui est configuré avec la configuration programmée par l'utilisateur en représentant graphiquement un panneau de commande du dispositif de télécommande (104) et en commandant l'équipement par le biais de l'ordinateur (102) sur la base de l'interaction entre l'utilisateur final et le panneau de commande.

2. Système selon la revendication 1, dans lequel :
- le système (100) comprend un nouveau autre émetteur (108) qui est couplé à l'ordinateur ; et
- l'application logicielle (114) permet à l'utilisateur de commander l'équipement par le biais de l'ordinateur et du nouveau autre émetteur.

3. Système selon la revendication 1, dans lequel le dispositif de télécommande (104) est capable d'être programmé par le biais de l'ordinateur.

4. Système selon la revendication 3, dans lequel l'application logicielle (114) comprend un éditeur visuel (118).

5. Procédé visant à permettre d'émuler l'exploitation d'un dispositif de télécommande programmable par l'utilisateur (104) pour commander l'équipement électronique, le procédé comprenant les étapes suivantes consistant à :
- permettre d'exécuter une application logicielle (114) sur un ordinateur (102) afin de permettre à un utilisateur final de modifier une configuration programmée par l'utilisateur du dispositif de télécommande (104), **caractérisé en ce que** le procédé comprend encore l'étape suivante consistant à :
- permettre à l'application logicielle (114) d'émuler l'exploitation du dispositif de télécommande qui est configuré avec la configuration programmée par l'utilisateur en représentant graphiquement un panneau de commande du dispositif de télécommande et en commandant l'équipement par le biais de l'ordinateur sur la base de l'interaction entre l'utilisateur final et le panneau de commande.

6. Procédé selon la revendication 5, comprenant le fait de permettre l'émulation d'une programmation du dispositif par le biais d'une application logicielle (118).

7. Procédé selon la revendication 6, comprenant le fait de permettre le téléchargement à partir de l'ordinateur dans le dispositif en conséquence de la programmation émulée.

8. Application logicielle (114) pour être exécutée sur un ordinateur (102), l'application logicielle, lorsqu'elle est exécutée par l'ordinateur, effectuant que l'ordinateur permet à un utilisateur final de modifier une configuration programmée par l'utilisateur d'un dispositif de télécommande programmable par l'utilisateur et d'émuler l'exploitation du dispositif de télécommande (104) qui est configuré avec la configuration programmée par l'utilisateur en représentant graphiquement un panneau de commande du dispositif de télécommande (104) et en commandant l'équipement par le biais de l'ordinateur (102) sur la base de l'interaction entre l'utilisateur final et le panneau de commande.

9. Application logicielle selon la revendication 8, comprenant un éditeur visuel (118) pour permettre l'édition d'une configuration de commande du contrôleur.

10. Application logicielle selon la revendication 8, comprenant un émulateur (120) qui est capable d'être exécuté sur le dispositif de télécommande (104) pour une utilisation opérationnelle du dispositif de télécommande (104).
